# EUROPEAN PATENT SPECIFICATION

(11) **EP 3 667 369 B1**
(45) Date of publication and mention of the grant of the patent: **04.10.2023**
(21) Application number: 18212810.8
(22) Date of filing: 14.12.2018
(51) Int. Cl.: G01S 19/42, G01S 19/23, G01S 19/36

(54) **POSITIONING SYSTEM FOR A LAND VEHICLE AND METHOD FOR COMPUTING HIGH-PRECISION GNSS POSITIONS OF A LAND VEHICLE**
POSITIONIERUNGSSYSTEM FÜR EIN LANDFAHRZEUG UND VERFAHREN ZUR BERECHNUNG VON HOCHPRÄZISEN GNSS-POSITIONEN EINES LANDFAHRZEUGS
SYSTÈME DE POSITIONNEMENT POUR VÉHICULE TERRESTRE ET PROCÉDÉ DE CALCUL DE HAUTE PRÉCISION DE POSITION GNSS D'UN VÉHICULE TERRESTRE

(43) Date of publication of application: 17.06.2020
(73) Proprietor: Valeo Comfort and Driving Assistance, 94000 Créteil (FR)
(72) Inventor: KNOESS, Henning, 61381 Friedrichsdorf (DE)
(74) Representative: Delaval, Guillaume Laurent

(56) References cited:
- WO-A1-2018/066193
- CN-B- 107 290 762
- US-A1- 2011 050 497
- US-A1- 2018 172 838
- DILSSNER FLORIAN ET AL: "Impact of Near-Field Effects on the GNSS Position Solution", GNSS 2008 - PROCEEDINGS OF THE 21ST INTERNATIONAL TECHNICAL MEETING OF THE SATELLITE DIVISION OF THE INSTITUTE OF NAVIGATION (ION GNSS 2008), THE INSTITUTE OF NAVIGATION, 8551 RIXLEW LANE SUITE 360 MANASSAS, VA 20109, USA, 19 September 2008 (2008-09-19), pages 612-624, XP056002720,

## Description

### FIELD OF THE INVENTION

The present disclosure relates to a positioning system for a land vehicle and to a method for computing high-precision GNSS positions of a land vehicle.

### BACKGROUND OF THE INVENTION

A satellite navigation method for determining the position of a receiver by determining a signal travel time between the satellites and the receiver is known from DE 102 39 952 A1. Said method is characterized in that either the times of reception by the receiver of the signals from the satellites are determined, both by means of an accurate time reference, in the receiver, and based on the signals from the satellites, then compared with each other, or at least two position solutions are determined based on the reception times, by the receiver of signals from the satellites, determined by means of an accurate time reference of the receiver and of at least one signal from the different satellites respectively, then compared with each other.

WO2018/066193 discloses a multi-antenna arrangement where accuracy is improved by correcting phase center information.

### SUMMARY OF THE INVENTION

It is an object of the invention, as defined by the claims, to propose a positioning system for a land vehicle and a method for computing high-precision GNSS positions of a land vehicle which works with little technical effort and at low cost.

The inventive positioning system for a land vehicle comprises:
- a processing unit for computing data and for output of high-precision GNSS positions,
- a antenna with at least one antenna element for reception of GNSS signals in at least a first band,
- a GNSS receiver for output of antenna data to the processing unit,
- a memory with a stored phase-center-variation-matrix for the at least one antenna element and for output of correction data of the phase-center-variation-matrix to the processing unit, whereby the correction data (CD) was recorder to a the memory (M) as result of measurement of the land vehicle together with its antenna(s), wherein a measurement is done for each antenna element for the relevant angles and for each band which shall be used, wherein during the measurement, the phase-center-variation patterns for the relevant angles and bands have been recorded,
- a rotation angle detection apparatus for providing the processing unit with rotation angle data to the processing unit and
- a tilt angles detection apparatus for providing the processing unit with tilt angles data.

The phase-center-variation-matrix and data which describe the orientation of the vehicle can be easily provided, thus the positioning system stays technically simple and works at low cost.

The positioning system may further comprise only one antenna element. Such a positioning system is easy to produce since a conventional and low priced vehicle antenna with one antenna element can be used. Additionally only one measurement of the vehicle with its antenna has to be done to generate the appropriate phase-center-variation-matrix.

Alternatively the positioning system comprises two antenna elements. Such a positioning system is easy to produce as vehicle antenna with two antenna elements. On the basis of the phase-center-variation-matrix with values for both antenna element and an offset between the antenna elements it is possible to compute high-precision GNSS positions which are of higher accuracy then high-precision GNSS positions which are computed on the basis of only one antenna element.

The inventive method for computing high-precision GNSS positions of a land vehicle by using a positioning system as by claim 4.

The method may use only one antenna element to receive the satellite position data with the GNSS receiver from at least one satellite. Such a method will require only little computing effort and require only cost-effective hardware.

Alternatively the method uses two antenna elements to receive the satellite position data with the GNSS receiver from at least one satellite, wherein the processing unit is provided for the computing of the high-precision GNSS position out of the memory additionally with an offset vector which describes a spacing of the first antenna element and the second antenna element. According to a special embodiment of this method the satellite position data are received by the first antenna element on a first band and by the second antenna element on a second band. On the basis of the phase-center-variation-matrix with values for both antenna elements and an offset between the antenna elements it is possible to compute high-precision GNSS positions which are of higher accuracy then high-precision GNSS positions which are computed on the basis of only one antenna element.

### BRIEF DESCRIPTION OF THE DRAWINGS

The foregoing and other features and advantages of the present invention will become apparent to those skilled in the art to which the present invention relates upon reading the following description with reference to the accompanying drawing, in which:
- Figure 1: shows a schematic example of a positioning system for a land vehicle and
- Figure 2: shows a workflow for computation of a high-precision position.

### DETAILED DESCRIPTION OF THE INVENTION

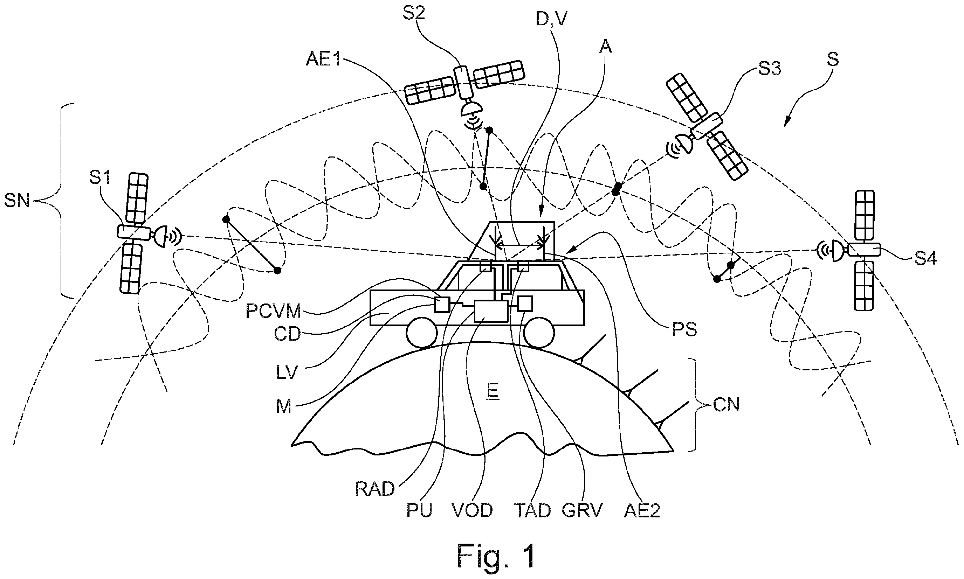

Figure 1 shows a schematic example of a positioning system PS for a land vehicle LV which travels on earth E. The land vehicle LV is equipped with the positioning system PS which comprises an antenna A which comprises two receiving antenna elements AE1 and AE2. The first antenna element AE1 is able to receive signals on the frequency of the L1-band and the second antenna element AE2 is able to receive signals on the frequency of the L2-band. Both antenna elements AE1, AE2 are arranged at a fixed distance D wherein the distance D is defined by an offset vector V. In the sky S four satellites S1 - S4 are shown, which are in reach of the positioning system PS. Each satellite S1 - S4 is transmitting signals on the L1-band and the L2-band. The positioning system PS comprises the antenna A with the antenna elements A1 and A2, a processing unit PU, a GNSS receiver GRV and a memory M. Due to the information which is transmitted by the satellites S1 - S4, their orbital positions are known by the processing unit PU. The spherical coordinates of each satellite S1 - S4 can then be calculated based on a low precision position of the positioning system PS provided either by GNSS receiver GRV on the basis of a satellite network SN which comprises at least the satellites S1 - S4 or provided by any other cellular network. A cellular network CN is schematically shown in figure 1. Due to the fact that the distances between the positioning system PS and each of the satellites S1 - S4 are big with respect to an offset distance D between the receiving antenna elements AE1 and AE2, one set of spherical coordinates may be sufficient for a computation. Each received satellite signal for the L1-band and the L2-band, is then corrected in time by the processing unit PU by corresponding values of correction Data CD out of a phase-center-variation-matrix PCVM which is saved in a memory M. The correction data CD of the PCV-matrix PCVM have been generated by measuring each of the antenna elements AE1, AE2 at any band for example the L1-band and the L2-band that is of interest, since the phase center of an antenna element is not only dependent on an angle (elevation and azimuth) but is also dependent on the signal frequency. Such measurements are conducted while the positioning system PS is mounted to the land vehicle LV. For detecting a rotation angle of the antenna A the positioning system comprises a rotation angle detection apparatus RAD for example a heading sensor. For detecting tilt angles of the antenna A the positioning system comprises a tilt angle detection apparatus TAD, for example tilt sensors. Both sensors RAD, TAD provide their data to the processing unit PU. Since the antenna A is fixed to the land vehicle LV at a first tilt angle a pitch angle of the land vehicle is detected and as a second tilt angle a roll angle of the land vehicle is detected. Since the antenna is fixed to the land vehicle a yaw angle with a geographic targeting is detected as a rotation angle. On the basis of vehicle orientation data VOD which comprise the yaw angle with a geographic targeting and pitch angle and the roll angle the processing unit PU retrieves the appropriate correction data CD from the memory.

With such a positioning system respectively with such a method high position accuracy can be achieved by using only one low cost antenna element for the GNSS navigation system. Such a positioning system must be measured in a position mounted to the land vehicle by an adequate measurement system, e.g. by means of an anechoic chamber. During the measurement, PCV patterns for the relevant angles and receiving frequencies (bands) have to be recorded. The measured PCV-matrix is stored in the memory of the positioning system. This memory can either be part of a GNSS chip in the GNSS receiver or be part any electronics able to interact with the GNSS receiver. In a post-processing step which is done in real time the PCV-matrix PCVM is used to compensate any positioning error caused by the variation of the phase center of the antenna element. The signal of each of the satellites must be individually corrected in time, depending on the satellites location at the sky with respect to the position of the positioning system on the land vehicle. Therefore the relative position of the satellite in respect to the receiving antenna must be known. This relative position can be derived, by computing the absolute position of the satellite and the absolute position of the antenna element of the positioning system together with the orientation of the antenna element in space. Thereby the position for the positioning system can have a higher uncertainty, since an error has no significance for the solid angle calculation (distance of satellite is far compared to the error). The absolute position of the antenna element can be derived either by the GNSS receiver itself or by any other cell based system for instance by a real-time-kinematic system or by a mobile communication system. For each satellite the position is derived by information sent from the satellite itself for example almanac or ephemeris. To compute the orientation of the positioning system respectively the antenna element of the positioning system in space, the rotation and tilt angles of the antenna element must be known. The rotation can be computed by a rotation angle detection apparatus for example by means of historical position data or by a digital compass and the tilt angles by a tilt angle detection apparatus for example a 3D-sensor.

The same method can be used for a positioning system with an antenna comprising multiple antenna elements for the reception of GNSS-signals, wherein each of the antenna elements is supporting one or more receiving bands. In this case at least one offset vector which describes the spacing of the antenna elements needs to be taken additionally into account for computing high-precision GNSS positions

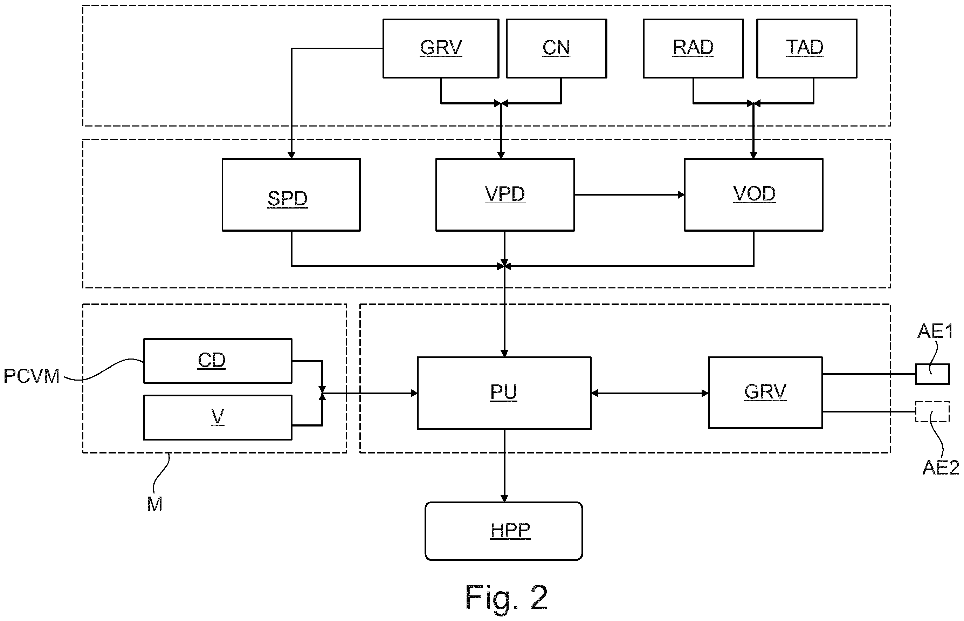

Figure 2 shows a workflow for computation of a high-precision position of the land vehicle LV shown in figure 1 by using a positioning system PS shown in figure 1 comprising the steps:
- providing the processing unit PU with satellite position data SPD representing the position of at least one satellite S1-S4, wherein the satellite position data SPD are provided by a GNSS receiver GRV which receives the satellite position data via at least one antenna element (AE1, AE2) from at least one of the satellites S1-S4,
- providing the processing unit PU with vehicle position data VPD representing the geographical position of the land vehicle LV, wherein the vehicle position data VPD are provided by the GNSS receiver GRV or are provided by a cellular network CN,
- providing the processing unit PU with vehicle orientation data VOD, wherein the vehicle orientation data VOD comprise a rotation angle of the land vehicle LV and a first tilt angel of the land vehicle LV and a second tilt angle of the vehicle LV, wherein the rotation angle is provided by a rotation angle detection apparatus RAD and wherein the tilt angles are provided by a tilt angle detection apparatus TAD,
- providing the processing unit PU on the basis of the vehicle orientation data VOD out of the memory M with correction data CD, wherein the correction data CD are stored for each antenna element AE1, AE2 and for at least one band of each antenna element AE1, AE2 and
- computation of the high-precision GNSS position HPP by the processing unit PU from the satellite position data SPD and from the vehicle position VPD data and from the vehicle orientation data VOD.

According to a first embodiment the satellite position data are received by the GNSS receiver GRV via only the first antenna element AE1 - shown in figure 2 with solid lines - from at least one satellite.

According to a second embodiment the satellite position data are received by the GNSS receiver GRV via the first and the second antenna elements AE1, AE2 - the first antenna element AE1 is shown in solid lines, the second antenna element is shown in dotted lines - from at least one satellite, wherein the satellite position data SPD are received by the first antenna element AE1 on a first band and by the second antenna element AE2 on the same band or on a second band, wherein the processing unit PU is provided for the computing of the high-precision GNSS position HPP out of the memory M additionally with the offset vector V by which a spacing of the first antenna element AE1 and the second antenna element AE2 is described.

The correction data CD are recorded in the phase-center-variation-matrix PCVM to the memory M as result of measurements of the land vehicle LV together with its antenna A, wherein a measurement is done for each antenna element AE1, AE2 for the relevant angles and for each band (receiving frequency) which shall be used.

In figure 2 the same GNSS receiver GRV is shown twice in order to simplify the figure. According to a further embodiment the positioning system comprises two GNSS receivers.

### REFERENCE NUMERALS:

- A: antenna
- AE1: first antenna element
- AE2: second antenna element
- CD: correction data
- CN: cellular network
- D: distance
- E: earth
- GRV: GNSS receiver
- HPP: high-precision GNSS position
- LV: land vehicle
- M: memory
- PCVM: phase-center-variation-matrix
- PS: positioning system
- PU: processing unit
- RAD: rotation angle detection apparatus
- S: sky
- SN: satellite network
- SPD: satellite position data
- S1-S4: satellite
- TAD: tilt angle detection apparatus
- V: vector
- VOD: vehicle orientation data
- VPD: vehicle position data

## Claims

1. Positioning system (PS) for a land vehicle (LV) comprising:
- a processing unit (PU) for computing data and for output of high-precision GNSS positions (HPP),
- an antenna (A) with at least one antenna element (AE1, AE2) for reception of GNSS signals in at least a first band,
- a GNSS receiver (GRV) for output of antenna data to the processing unit (PU), - a memory (M) with a stored phase-center-variation-matrix (PCVM) for the at least one antenna element (AE1, AE2) and for output of correction data (CD) of the phase-center-variation-matrix (PCVM) to the processing unit (PU),
**characterised in that** the correction data (CD) was recorded to the memory (M) as result of measurements of the land vehicle (LV) together with its antenna (A), wherein a measurement is done for each antenna element (AE1, AE2) for the relevant angles and for each band which shall be used, wherein during the measurement, the phase-center-variation (PCV) patterns for the relevant angles and receiving frequencies of the band have been recorded; and further **characterised by**
- a rotation angle detection apparatus (RAD) for providing the processing unit (PU) with rotation angle data to the processing unit and
- a tilt angles detection apparatus (TAD) for providing the processing unit with tilt angles data.

2. Positioning system according to claim 1 **characterized in that**, the antenna (A) comprises only one antenna element (AE1; AE2).

3. Positioning system according to claim 1 **characterized in that**, the antenna (A) comprises two antenna elements (AE1, AE2).

4. Method for computing high-precision GNSS positions (HPP) of a land vehicle (LV) by using a positioning system (PS) according to at least one of the preceding claims comprising the steps:
- providing a processing unit (PU) with satellite position data (SPD) representing the position of at least one satellite (S1-S4), wherein the satellite position data (SPD) are provided by a GNSS receiver (GRV) which receives the satellite position data (SPD) via at least one antenna element (AE1, AE2) from at least one of the satellites (S1-S4),
- providing the processing unit (PU) with vehicle position data (VPD) representing the geographical position of the land vehicle (LV), wherein the vehicle position data (VPD) are provided by the GNSS receiver (GRV) or are provided by a cellular network (CN),
- providing the processing unit (PU) with vehicle orientation data (VOD), wherein the vehicle orientation data (VOD) comprise a rotation angle of the land vehicle (LV) and a first tilt angel of the land vehicle (LV) and a second tilt angle of the vehicle (LV), wherein the rotation angle is provided by a rotation angle detection apparatus (RAD) and wherein the tilt angles are provided by a tilt angle detection apparatus (TAD),
- providing the processing unit (PU) on the basis of the vehicle orientation data VOD out of a memory (M) with correction data (CD), wherein the correction data (CD) are stored for each antenna element and for at least one band of each antenna element,
the correction data (CD) being corrections to the phase-center-variation-matrix (PCVM) stored in the memory (M),
the correction data (CD) being recorded to the memory (M) as result of measurements of the land vehicle (LV) together with its antenna (A), wherein a measurement is done for each antenna element (AE1, AE2) for the relevant angles and for each band which shall be used, and wherein during the measurement, phase centre variation (PCV) patterns for the relevant angles and receiving frequencies of each band have been recorded,
- computation of the high-precision GNSS positions (HPP) by the processing unit (PU) from the satellite position data (SPD) and from the vehicle position data (VPD) and from the vehicle orientation data (VOD) and from the correction data.

5. Method according to claim 4 wherein the satellite position data (SPD) are received by the GNSS receiver (GRV) via only one antenna element (AE1; AE2) from at least one satellite (S1-S4) .

6. Method according to claim 4 wherein the satellite position data (SPD) are received by the GNSS receiver (GRV) via two antenna elements (AE1, AE2) namely a first antenna element (AE1) and a second antenna element (AE2) from at least one satellite (S1-S4), wherein the processing unit (PU) is provided for the computing of the high-precision GNSS position (HPP) out of the memory (M) additionally with an offset vector (V) by which a spacing of the first antenna element (AE1) and the second antenna element (AE2) is described.

## Patentansprüche

1. Positionierungssystem (PS) für ein Landfahrzeug (LV), Folgendes umfassend:
- eine Verarbeitungseinheit (PU) zur Berechnung von Daten und zur Ausgabe von hochpräzisen GNSS-Positionen (HPP),
- eine Antenne (A) mit mindestens einem Antennenelement (AE1, AE2) zum Empfang von GNSS-Signalen in mindestens einem ersten Band,
- einen GNSS-Empfänger (GRV) zur Ausgabe von Antennendaten an die Verarbeitungseinheit (PU),
- einen Speicher (M) mit einer gespeicherten Phasenzentrum-Variations-Matrix (PCVM) für das mindestens eine Antennenelement (AE1, AE2) und zur Ausgabe von Korrekturdaten (CD) der Phasenzentrum-Variations-Matrix (PCVM) an die Verarbeitungseinheit (PU),
**dadurch gekennzeichnet, dass** die Korrekturdaten (CD) im Speicher (M) als Ergebnis von Messungen des Landfahrzeugs (LV) zusammen mit seiner Antenne (A) aufgezeichnet wurden,
wobei für jedes Antennenelement (AE1, AE2) eine Messung für die relevanten Winkel und für jedes Band, das verwendet werden soll, durchgeführt wird,
wobei während der Messung die Muster der Phasenzentrum-Variation (PCV) für die relevanten Winkel und Empfangsfrequenzen des Bandes aufgezeichnet wurden; und
ferner **gekennzeichnet durch**:
- eine Drehwinkel-Detektionsvorrichtung (RAD) zur Versorgung der Verarbeitungseinheit (PU) mit Drehwinkeldaten, und
- eine Neigungswinkel-Detektionsvorrichtung (TAD) zur Versorgung der Verarbeitungseinheit mit Neigungswinkeldaten.

2. Positionierungssystem nach Anspruch 1,
**dadurch gekennzeichnet, dass** die Antenne (A) nur ein Antennenelement (AE1, AE2) umfasst.

3. Positionierungssystem nach Anspruch 1,
**dadurch gekennzeichnet, dass** die Antenne (A) zwei Antennenelemente (AE1, AE2) umfasst.

4. Verfahren zur Berechnung von hochpräzisen GNSS-Positionen (HPP) eines Landfahrzeugs (LV) unter Verwendung eines Positionierungssystems (PS) nach mindestens einem der vorhergehenden Ansprüche, wobei das Verfahren die folgenden Schritte umfasst:
- Versorgen einer Verarbeitungseinheit (PU) mit Satellitenpositionsdaten (SPD), die die Position von mindestens einem Satelliten (S1-S4) darstellen,
wobei die Satellitenpositionsdaten (SPD) von einem GNSS-Empfänger (GRV) bereitgestellt werden, der die Satellitenpositionsdaten (SPD) über mindestens ein Antennenelement (AE1, AE2) von mindestens einem der Satelliten (S1-S4) empfängt,
- Versorgen der Verarbeitungseinheit (PU) mit Fahrzeugpositionsdaten (VPD), die die geografische Position des Landfahrzeugs (LV) darstellen,
wobei die Fahrzeugpositionsdaten (VPD) vom GNSS-Empfänger (GRV) oder von einem Mobilfunknetz (CN) bereitgestellt werden,
- Versorgen der Verarbeitungseinheit (PU) mit Fahrzeugorientierungsdaten (VOD),
wobei die Fahrzeugorientierungsdaten (VOD) einen Drehwinkel des Landfahrzeugs (LV), einen ersten Neigungswinkel des Landfahrzeugs (LV) und einen zweiten Neigungswinkel des Fahrzeugs (LV) umfassen,
wobei der Drehwinkel durch eine Drehwinkel-Detektionsvorrichtung (RAD) bereitgestellt wird, und
wobei die Neigungswinkel von einer Neigungswinkel-Detektionsvorrichtung (TAD) bereitgestellt werden,
- Versorgen der Verarbeitungseinheit (PU) auf der Grundlage der Fahrzeugorientierungsdaten VOD aus einem Speicher (M) mit Korrekturdaten (CD),
wobei die Korrekturdaten (CD) für jedes Antennenelement und für mindestens ein Band jedes Antennenelements gespeichert werden, wobei die Korrekturdaten (CD) Korrekturen der in dem Speicher (M) gespeicherten Phasenzentrum-Variations-Matrix (PCVM) sind, wobei die Korrekturdaten (CD) in dem Speicher (M) als Ergebnis von Messungen des Landfahrzeugs (LV) zusammen mit seiner Antenne (A) aufgezeichnet werden,
wobei für jedes Antennenelement (AE1, AE2) eine Messung für die relevanten Winkel und für jedes Band, das verwendet werden soll, durchgeführt wird, und
wobei während der Messung die Muster der Phasenzentrumsvariation (PCV) für die relevanten Winkel und Empfangsfrequenzen jedes Bandes aufgezeichnet wurden,
- Berechnen der hochgenauen GNSS-Positionen (HPP) durch die Verarbeitungseinheit (PU) aus den Satellitenpositionsdaten (SPD) und aus den Fahrzeugpositionsdaten (VPD) sowie aus den Fahrzeugorientierungsdaten (VOD) und aus den Korrekturdaten.

5. Verfahren nach Anspruch 4,
wobei die Satellitenpositionsdaten (SPD) von dem GNSS-Empfänger (GRV) über nur ein Antennenelement (AE1, AE2) von mindestens einem Satelliten (S1-S4) empfangen werden.

6. Verfahren nach Anspruch 4,
wobei die Satellitenpositionsdaten (SPD) von dem GNSS-Empfänger (GRV) über zwei Antennenelemente (AE1, AE2), nämlich ein erstes Antennenelement (AE1) und ein zweites Antennenelement (AE2), von mindestens einem Satelliten (S1-S4) empfangen werden,
wobei die Verarbeitungseinheit (PU) zur Berechnung der hochgenauen GNSS-Position (HPP) aus dem Speicher (M) zusätzlich mit einem Offsetvektor (V) versehen ist, durch den ein Abstand des ersten Antennenelements (AE1) und des zweiten Antennenelements (AE2) beschrieben wird.

## Revendications

1. Système de positionnement (PS) pour véhicule terrestre (BT) comprenant :
- une unité de traitement (PU) pour le calcul de données et la délivrance de positions GNSS de haute précision (HPP),
- une antenne (A) comptant au moins un élément d'antenne (AE1, AE2) pour la réception de signaux GNSS dans au moins une première bande,
- un récepteur GNSS (GRV) pour la délivrance de données d'antenne à l'unité de traitement (PU),
- une mémoire (M) à matrice de variation de centre de phase (PCVM) stockée pour l'au moins un élément d'antenne (AE1, AE2) et pour la délivrance de données de correction (CD) de la matrice de variation de centre de phase (PCVM) à l'unité de traitement (PU),
**caractérisé en ce que** les données de correction (CD) ont été enregistrées dans la mémoire (M) à la suite de mesures du véhicule terrestre (BT) et de son antenne (A), dans lequel une mesure est réalisée pour chaque élément d'antenne (AE1, AE2) pour les angles pertinents et pour chaque bande qui seront utilisés, dans lequel, au cours de la mesure, les modèles de variation de centre de phase (PCV) pour les angles pertinents et les fréquences de réception de la bande ont été enregistrés ; et **caractérisé en outre par**
- un appareil de détection d'angle de rotation (RAD) pour fournir à l'unité de traitement (PU) des données d'angle de rotation à l'unité de traitement et
- un appareil de détection d'angles d'inclinaison (TAD) pour fournir à l'unité de traitement des données d'angles d'inclinaison.

2. Système de positionnement selon la revendication 1 **caractérisé en ce que** l'antenne (A) ne comprend qu'un seul élément d'antenne (AE1 ; AE2).

3. Système de positionnement selon la revendication 1 **caractérisé en ce que** l'antenne (A) comprend deux éléments d'antenne (AE1, AE2).

4. Procédé de calcul de positions GNSS de haute précision (HPP) d'un véhicule terrestre (LV) à l'aide d'un système de positionnement (PS) selon au moins une des revendications précédentes comprenant les étapes de :
- fourniture à une unité de traitement (PU) de données de position de satellite (SPD) représentant la position d'au moins un satellite (S1-S4), dans lequel les données de position de satellite (SPD) sont fournies par un récepteur GNSS (GRV) qui reçoit les données de position de satellite (SPD) par l'intermédiaire d'au moins un élément d'antenne (AE1, AE2) d'au moins un des satellites (S1-S4),
- fourniture à l'unité de traitement (PU) de données de position de véhicule (VPD) représentant la position géographique du véhicule terrestre (LV), dans lequel les données de position de véhicule (VPD) sont fournies par le récepteur GNSS (GRV) ou sont fournies par un réseau cellulaire (CN),
- fourniture à l'unité de traitement (PU) de données d'orientation de véhicule (VOD), dans lequel les données d'orientation de véhicule (VOD) comprennent un angle de rotation du véhicule terrestre (LV) et un premier angle d'inclinaison du véhicule terrestre (LV) et un second angle d'inclinaison du véhicule (LV), dans lequel l'angle de rotation est fourni par un appareil de détection d'angle de rotation (RAD) et dans lequel les angles d'inclinaison sont fournis par un appareil de détection d'angles d'inclinaison (TAD),
- fourniture à l'unité de traitement (PU) sur la base des données d'orientation de véhicule VOD à partir d'une mémoire (M) de données de correction (CD), dans lequel les données de correction (CD) sont stockées pour chaque élément d'antenne et pour au moins une bande de chaque élément d'antenne, les données de correction (CD) étant des corrections de la matrice de variation de centre de phase (PCVM) stockée dans la mémoire (M), les données de correction (CD) étant enregistrées dans la mémoire (M) à la suite de mesures du véhicule terrestre (BT) et de son antenne (A), dans lequel une mesure est réalisée pour chaque élément d'antenne (AE1, AE2) pour les angles pertinents et pour chaque bande qui seront utilisés, et dans lequel, pendant la mesure, des modèles de variation de centre de phase (PCV) pour les angles pertinents et les fréquences de réception de chaque bande ont été enregistrés,
- calcul des positions GNSS de haute précision (HPP) par l'unité de traitement (PU) à partir des données de position de satellite (SPD), des données de position de véhicule (VPD), des données d'orientation de véhicule (VOD) et des données de correction.

5. Procédé selon la revendication 4 dans lequel les données de position de satellite (SPD) sont reçues par le récepteur GNSS (GRV) par l'intermédiaire d'un seul élément d'antenne (AE1 ; AE2) à partir d'au moins un satellite (Sl-S4).

6. Procédé selon la revendication 4 dans lequel les données de position de satellite (SPD) sont reçues par le récepteur GNSS (GRV) par l'intermédiaire de deux éléments d'antenne (AE1, AE2) à savoir un premier élément d'antenne (AE1) et un second élément d'antenne (AE2) à partir d'au moins un satellite (S1-S4), dans lequel un vecteur décalé (V) par lequel un espacement entre le premier élément d'antenne (AE1) et le second élément d'antenne (AE2) est décrit est fournie de plus à partir de la mémoire (M) à l'unité de traitement (PU) pour le calcul de la position GNSS de haute précision (HPP).
